# EUROPEAN PATENT SPECIFICATION

(11) **EP 2 621 189 B1**
(45) Date of publication and mention of the grant of the patent: **14.12.2016**
(21) Application number: 13152450.6
(22) Date of filing: 24.01.2013
(51) Int. Cl.: H04N 21/84, H04N 21/658, H04N 21/231, H04N 21/266, H04N 21/435

(54) **Device and method for generating electronic program guide and display apparatus for use with the same**
Vorrichtung und Verfahren zur Erzeugung eines elektronischen Programmführers und Anzeigevorrichtung zur Verwendung damit
Dispositif et procédé de génération de guide de programme électronique et appareil d'affichage destiné à être utilisé avec celui-ci

(30) Priority: 25.01.2012 KR 20120007134
(43) Date of publication of application: 31.07.2013
(73) Proprietor: Samsung Electronics Co., Ltd, Gyeonggi-do 443-742 (KR)
(72) Inventor: Han, Se-Jun, Seo-gu Daejeon (KR); Lee, Sang-kwon, Suwon-si Gyeonggi-do (KR); Jeong, Seok-hyun, Gangdong-gu Seoul (KR); Cho, Yun-jeong, Suwon-si Gyeonggi-do (KR)
(74) Representative: Appleyard Lees IP LLP

(56) References cited:
- US-A1- 2008 126 477
- US-A1- 2009 245 747
- US-A1- 2011 067 077
- US-A1- 2011 314 386

## Description

### BACKGROUND

### 1. Field of the Invention

Apparatuses and methods consistent with the exemplary embodiments relate to display apparatuses, and more particularly, to a device and method for generating an electronic program guide (EPG) and a display apparatus for use with the same.

### 2. Description of the Related Art

Generally, an electronic program guide (EPG) is generated using information provided by a broadcaster and is displayed on a display apparatus, e.g., a television receiver capable of receiving a broadcasting signal, in response to a user control of the display apparatus. A general EPG is text-based and may include a programming schedule for a plurality of broadcasting channels together with other information (e.g., episode information) related to specific broadcasting programs, which is useful in making channel selections. On the other hand, a mosaic EPG typically includes image information relative to one or more of the broadcasting programs, respectively. A mosaic EPG may be generated using a representative image, such as a predetermined screen shot or other static means, provided by a broadcaster to represent a specific broadcasting program.

Such static means of EPG generation, including mosaic EPG generation, cannot reflect real-time or updated program information. A viewer may therefore fail to recognize important details of a broadcasting program of the EPG, or even the nature of the broadcasting program. To make a reliable determination regarding the broadcasting program of a contemporary EPG, the user must select the channel to view at least a portion of the broadcasting program. Moreover, without thus selecting the channel, the user of a contemporary EPG is unable to ascertain which part of a long or episodic program is currently being broadcast at a given time. In some cases, the EPG may even contain incorrect information, making accurate program recognition impossible.

In effort to overcome these drawbacks, a contemporary device for generating a mosaic EPG may be provided with an image capturing device associated with a service provider, enabling a currently broadcast image to be captured for any or all channels of the service provider. The EPG is generated using the captured images rather than a representative image from the broadcaster.

Meanwhile, multiple service operators typically provide a broadcasting signal to a display apparatus, and the service operators vary depending on the area in which the display apparatus is located. Establishing a system for every area to capture broadcasting images from all areas, however, is economically inefficient, since a capturing device would be needed for each local broadcasting signal provider, which may include those providing one or more among cable broadcasting services, satellite broadcasting services, and Internet (IP-based) broadcasting services.

US 2011/314386 discloses a method for operating an image display apparatus that includes storing a Web site list including a plurality of Web sites and login information for the Web sites, connecting to servers of at least two of the stored Web sites using the stored login information, and displaying a list of the connected Web sites or Web pages of the connected Web sites on at least a part of a display.

US 2011/067077 describes an Internet Protocol television system that includes a selector module that is adapted to select a content item based upon metadata information associated with the content item and send the content item to a first set-top box. The content is recorded and video information associated with the content item is analyzed using a video interpretation algorithm, and credits information associated with the content item is obtained from the set-top-box.

US 2009/245747 shows a method that includes receiving, by a video client, a screen capture request, determining a type of screen capture, generating screen capture type information based on a result of determining the type of screen capture, analyzing at least one of screen capture data or screen capture type information, and providing a service to a user of the video client based on the analysis of the at least one of screen capture data or screen capture type information.

### SUMMARY

Accordingly, one or more exemplary embodiments provide a device and a method for generating an EPG reflecting real-time information about a broadcasting program and a display apparatus for use with the same.

The foregoing and/or other aspects may be achieved by providing a method as defined in claim 1 for generating an EPG, the method including steps of receiving ID information and/or broadcasting information from each of a plurality of display apparatuses capable of displaying a broadcasting signal; transmitting to one or more of the plurality of display apparatuses a request for display information of the broadcasting signal that is currently displayed by a corresponding display apparatus; receiving display information from a display apparatus of the plurality of display apparatuses in response to the transmitted request for display information; and generating an EPG including the received display information. The display information includes a broadcasting image of the currently displayed broadcasting signal, so that the generated EPG includes the broadcasting image and is transmitted to at least one of the plurality of display apparatuses.

The method may further include steps of storing the received ID/broadcasting information; and selecting one or more of the plurality of display apparatuses based on the stored information, wherein the request for display information is transmitted to the selected display apparatuses. The stored ID information may include location information of a corresponding display apparatus, where the selected display apparatuses include at least one display apparatus for each of a plurality of locations, or may include headend information of a corresponding display apparatus, where the selected display apparatuses include at least one display apparatus for each of a plurality of headends. The stored broadcasting information may include channel information of a current display of a corresponding display apparatus, where the selected display apparatuses include at least one display apparatus for each of a plurality of channels. The ID information of a display apparatus may include inherent ID information of the display apparatus, location information of the display apparatus, and/or headend information of the display apparatus; and the broadcasting information of a display apparatus may include channel information of a current display of the display apparatus, program information of a current display of the display apparatus, and/or information indicative of a changed channel of the display apparatus.

The method may further include steps of transmitting the generated EPG to a requesting display apparatus according to an EPG request made by the requesting display apparatus; generating a preference list of items arranged according to a broadcasting area and/or a broadcasting time, based on the received ID/broadcasting information, the items of the preference list comprising a plurality of channels and/or a plurality of programs; and transmitting the generated preference list to the requesting display apparatus.

The foregoing and/or other aspects may be achieved by providing a method of controlling a display apparatus, the method including steps of transmitting ID information and/or broadcasting information to a device for generating an EPG; receiving, from the EPG generating device, a request for display information of a broadcasting signal that is currently displayed by the display apparatus; and transmitting display information to the EPG generating device in response to the received request for display information. The display information transmitted to the EPG generating device includes a broadcasting image captured from a display unit of the display apparatus upon receiving the request for display information and may include information related to a broadcasting program that is currently displayed.

The ID/broadcasting information may be automatically transmitted to the EPG generating device in response to the display apparatus being turned on. The broadcasting information may be automatically transmitted to the EPG generating device according to a predetermined time interval or whenever a channel of the currently displayed broadcasting signal is changed.

The method may further include a step of retransmitting display information to the EPG generating device, if a channel of the currently displayed broadcasting signal is changed; may further include a step of storing the ID information of the display apparatus in a storage unit, the stored ID information including inherent ID information of the display apparatus, location information of the display apparatus, and/or headend information of the display apparatus; and/or may further include steps of transmitting an EPG request to the EPG generating device; receiving, in response to the EPG request, an EPG generated by the EPG generating device; and displaying the received EPG on a display unit.

The foregoing and/or other aspects may be achieved by providing a device as defined in claim 10 for generating an EPG, the device including a communication unit configured to receive ID information and/or broadcasting information from each of a plurality of display apparatuses capable of displaying a broadcasting signal, transmit to one or more of the display apparatuses a request for display information of the broadcasting signal that is currently displayed by a corresponding display apparatus, and receive display information from a display apparatus of the plurality of display apparatuses in response to the transmitted request for display information; and an EPG generator configured to generate an EPG including the received display information. The device may further include a storage unit configured to store the received ID/broadcasting information; and a controller configured to select at least one of the plurality of display apparatuses based on the stored information, wherein the request for display information is transmitted to the selected display apparatuses.

The communication unit may be further configured to transmit the generated EPG to a requesting display apparatus according to an EPG request made by the requesting display apparatus, and the device may further include a controller configured to generate a preference list of items arranged according to a broadcasting area and/or a broadcasting time, based on the received ID information and broadcasting information, the items of the preference list comprising a plurality of channels and/or a plurality of programs, wherein the communication unit is further configured to transmit the generated preference list to the requesting display apparatus.

The foregoing and/or other aspects may be achieved by providing a display apparatus including a communication unit configured to transmit ID information and/or broadcasting information to a device for generating an EPG; receive, from the EPG generating device, a request for display information of a broadcasting signal that is currently displayed by the display apparatus; and transmit display information to the EPG generating device in response to the received request for display information. The communication unit may be further configured to retransmit display information to the EPG generating device, if a channel of the currently displayed broadcasting signal is changed.

The display information transmitted to the EPG generating device includes a broadcasting image captured from a display unit of the display apparatus upon receiving
the request for display information, wherein the display information includes information related to a broadcasting program that is currently displayed. The generated EPG includes the broadcasted image.

The display apparatus may further include a storage unit configured to store the ID information of the display apparatus and address information of the EPG generating device.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates a system for generating an EPG according to an exemplary embodiment;
FIG. 2 is a control block diagram of an EPG generating device included in the system shown in FIG. 1;
FIG. 3 is a control block diagram of a display apparatus included in the system shown in FIG. 1;
FIG. 4 illustrates an exemplary embodiment of the EPG generation performed by the devices of FIGS. 1-3
FIG. 5 is a control flowchart of the EPG generating device shown in FIG. 2;
FIG. 6A is a control flowchart of the display apparatus shown in FIG. 3; and
FIG. 6B is a control flowchart of the display apparatus shown in FIG. 3 according to an aspect of an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

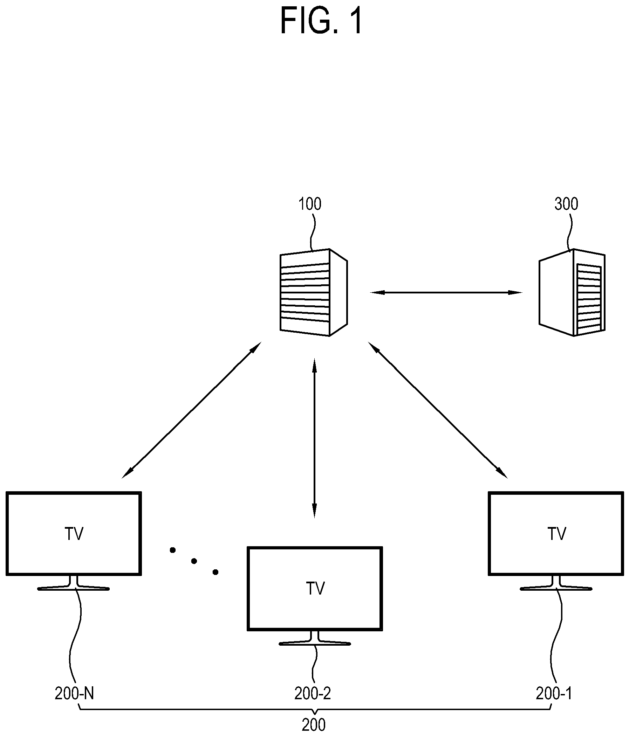

Referring to FIG. 1, a system for generating an electronic program guide (EPG) includes an EPG generating device 100 and a plurality of display apparatuses 200 capable of displaying a broadcasting signal received on at least one of a plurality of broadcasting channels. The system may further include an EPG database 300. Each of the display apparatuses 200 may comprise an Internet protocol television (IPTV) connected to the EPG generating device 100 through an Internet protocol such as a transmission control program (TCP), Internet protocol version 4 (IPv4), or Internet protocol version 6 (IPv6).

The EPG generating device 100 receives real-time display information from the plurality of display apparatuses 200 and generates an EPG by using the received information. The EPG generating device 100 may further transmit the generated EPG to the plurality of display apparatuses 200 or to any requesting display apparatus (not shown). The display information may include a captured image of the broadcasting signal that is currently displayed by a corresponding display apparatus of the plurality of display apparatuses 200 and may further include other information related to a broadcasting program that is currently displayed. Alternatively, the display information may include only information (e.g., text data) related to a broadcasting program that is currently displayed. Thus, the display information includes the broadcasting image captured for a currently displayed broadcasting signal and/or related broadcasting program information for the currently displayed broadcasting signal. The currently displayed broadcasting signal is the signal of a currently selected channel of the display apparatus.

The EPG generating device 100 may not receive display information from every apparatus of the plurality of display apparatuses 200. Rather, the EPG generating device 100 selects some of the display apparatuses 200, receives the display information from the selected display apparatuses 200 only, and uses the received display information to generate an EPG. Preferably, the EPG generating device 100 generates a mosaic EPG, which is made possible if the display information transmitted from a display apparatus includes a broadcasting image.

Each of the plurality of display apparatuses 200 transmits its own identification (ID) information and/or broadcasting information to the EPG generating device 100, where the broadcasting information is determined according to the status of a receiver of a corresponding display apparatus. The transmission may be performed automatically upon the corresponding display apparatus being turned on (powered). The EPG generating device 100 collects (stores) the ID information and broadcasting information transmitted by the plurality of display apparatuses 200 and, based on the collected information, selects some of the display apparatuses 200 among them to receive a request for display information. That is, the EPG generating device 100 sends a request to the selected display apparatuses 200. In doing so, the EPG generating device 100 requests display information of a broadcasting signal that is currently displayed on a given channel by a corresponding display apparatus among the selected display apparatuses 200 and generates an EPG by using the display information (i.e., a broadcasting image and/or text data related to the same broadcasting program) received in response to the request. The EPG generating device 100 transmits the generated EPG to a requesting display apparatus according to an EPG request made by the requesting display apparatus. Here, the EPG may be transmitted to a display apparatus among the display apparatuses 200 or to any device making the request.

The EPG database 300 provides information (e.g., broadcasting time) on programs of airwave or terrestrial broadcasting, cable broadcasting, satellite broadcasting, and/or IP broadcasting and information (e.g., a channel map) on the channels on which any or all of the programs of the broadcasters (i.e., service providers) are broadcast. The EPG database 300 may further provide the title, synopsis, credits (e.g., cast, producer, etc.), representative image, etc. of any or all programs. The representative image may be applied for a particular program or channel in lieu of a broadcasting image (or display information) that cannot be obtained from the display apparatuses 200, whereby the EPG database 300 may provide the representative image to the EPG generating device 100, which may use the representative image to generate a mosaic EPG.

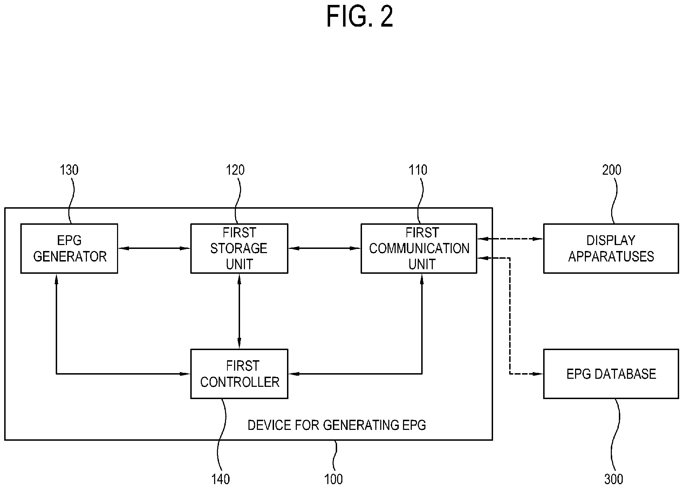

Referring to FIG. 2, the EPG generating device 100 of the system of FIG. 1 includes a first communication unit 110, a first storage unit 120, an EPG generator 130, and a first controller 140 which controls the foregoing elements. It may be assumed that the EPG generating device 100 performs all its functions under control of the first controller 140, unless otherwise noted. Though not specifically shown, the first communication unit 110 may enable the EPG generating device 100 to communicate with the EPG database 300.

The first communication unit 110 (e.g., a transceiver) respectively communicates with the display apparatuses 200 and may transmit and receive data to/from the display apparatuses 200 through a wired or wireless network. Thus, the first communication unit 110 enables the EPG generating device 100 to receive ID information and/or broadcasting information of each of the display apparatuses 200 from each of the display apparatuses 200.

The ID information includes at least one of inherent ID information, location information, and headend information of each of the display apparatuses 200. The inherent ID information of a display apparatus is used to identify the display apparatus. The location information of a display apparatus includes information indicative of a specific area where the display apparatus is located, which may be set by a user through a setting menu of the display apparatus, so that the set location information s transmitted to the EPG generating device 100. The headend information includes information indicative of a broadcasting service provider (e.g., satellite, cable, IP, etc.) to which a user of the display apparatus may subscribe. The broadcasting information includes one or more of channel information (e.g., a channel number) of the broadcasting signal currently displayed by each of the display apparatuses 200, program information (e.g., a program title) of the broadcasting signal currently displayed by each of the display apparatuses 200, and information indicative of a changed channel of a corresponding display apparatus.

The first communication unit 110, which operates entirely under the control of the first controller 140, may request current display information, for example, a real-time broadcasting image (e.g., a captured frame or screenshot of a program currently being broadcast on a channel), from at least one of the display apparatuses 200 among the plurality of display apparatuses 200, as selected by the first controller 140. The first communication unit 110 receives the display information in response to the request. The first communication unit 110 may receive information of a broadcasting program or signal of the channel (i.e., program information) together with a broadcasting image; any of this information may be part of the display information. Here, the program information may include a channel number in which the broadcasting program is broadcast, a program title, a program synopsis, program credits, a broadcasting time, etc. The first communication unit 110 may transmit the EPG generated by the EPG generator 130 to a display apparatus requesting the EPG.

The first storage unit 120 may store management information of the display apparatuses 200 as well as all data supplied by the display apparatuses 200 through the first communication unit 110, including display information (e.g., captured broadcasting images) of some of the display apparatuses 200 and ID information and/or broadcasting information of all of the display apparatuses 200. The stored information may include a communication time and/or an accessing time at which any of the display apparatuses 200 communicated with or accessed data from the EPG generating device 100, which information may be used in the selection of one or more of the display apparatuses 200 to receive a request for display information. The first storage unit 120 may further store the channel map information transmitted by the EPG database 300. The stored information may be used by the EPG generator 130 to generate an EPG, which may be a mosaic EPG.

The mosaic EPG generated by the EPG generator 130 includes an EPG formed as a mosaic (i.e., multiple screen images arranged in a single screen) based on individual images and corresponding audio signals, by collecting and reconstructing images for each of various broadcasting channels, to facilitate search and selection of broadcasting channels and to enable a user to select a desired channel. The EPG generator 130 generates a mosaic EPG showing current programs, that is, each of several programs which are on air and carried by a corresponding broadcasting channel. If a real-time broadcasting image of a particular broadcasting channel is not received from the display apparatuses 200, the EPG generator 130 may generate a mosaic EPG based on broadcasting information from the EPG database 300, by applying a representative image of the broadcasting program corresponding to the particular broadcasting channel.

A contemporary device for generating a mosaic EPG collects a representative image of a broadcasting program provided by a broadcaster, so that the mosaic EPG lacks real-time or updated information about the current broadcast. The EPG generating device 100, however, may receive from the plurality of display apparatuses 200 a broadcasting image of a broadcasting program that is currently displayed and may use the received broadcasting image in generating a mosaic EPG, to thereby provide a broadcasting image (display information) reflecting real-time information and updates relating to the broadcasting program. Application of the EPG generating device 100 precludes the necessity of providing a capturing device for each local broadcasting signal provider, in contrast to an application of the contemporary device.

The first controller 140 selects at least one of the plurality of display apparatuses 200 based on ID information and/or broadcasting information of each display apparatus, which is transmitted to the EPG generating device 100 by each display apparatus, controls the first communication unit 110 to request display information of a currently displayed broadcasting signal (channel) from the selected display apparatuses, and controls the EPG generator 130 to use the received display information to generate an EPG. That is, received ID information and broadcasting information, which is stored in the first storage unit 120, is used to select at least one of the plurality of display apparatuses 200, and a request for display information is transmitted to the selected display apparatuses. Then, in response to the transmitted request or requests, the EPG generating device 100 receives display information from one or more of the plurality of display apparatuses 200 and generates an EPG including the received display information. The ID information and/or broadcasting information is received from each of the plurality of display apparatuses 200, which are provided with second storage units in which address information of the EPG generating device 100 may be respectively stored together with the ID information and broadcasting information of the corresponding display apparatus. Thus, the first controller 140 performs a display apparatus selection based on the ID information and/or broadcasting information of each display apparatus, which may be regularly received from each display apparatus and stored locally.

More specifically, display apparatus selection may be made based on location information included in the received ID information, so that there is a display apparatus for each location; may be made based on headend information included in the received ID information, so that there is a display apparatus for each headend; may be made based on a channel number included in the received broadcasting information, so that there is a display apparatus for each channel; and/or may be made based on a program title included in the received broadcasting information, so that there is a display apparatus for each broadcasting program. As one example, assuming broadcasting channels A to Z, the first controller 140 selects from among the plurality of display apparatuses 200 those display apparatuses which may display one of channels A to Z at a particular time. That is, the first controller 140 selects a display apparatus currently displaying channel A, a display apparatus currently displaying channel B, and so on, to include selection of a display apparatus currently displaying channel Z, and transmits a request for display information to each of the selected display apparatuses. In response, the first controller 140 may respectively receive a broadcasting image, as currently displayed by the selected display apparatuses, for each of channels A to Z. The first controller 140 may then control the EPG generator 130 to generate a mosaic EPG by using the broadcasting images corresponding to channels A to Z. If, for example, there happens to be no display apparatus among the plurality of display apparatuses 200 that is currently powered and displaying (tuned to) channel C, the first controller 140 controls the EPG generator 130 to use broadcasting information provided by the EPG database 300 in order to complete a generated EPG. The broadcasting information from the EPG database 300 may include a representative image of a broadcasting program corresponding to channel C. This example applies similarly or equally to selecting a display apparatus and generating an EPG for each location or each headend.

The first controller 140 maintains an updated EPG. If, after a selected display apparatus transmits display information to the EPG generating device 100, the channel corresponding to the initial transmission is changed, the selected display apparatus may retransmit the display information of the currently displayed broadcasting signal, which is new display information. Thus, the display information of the changed (new) channel is transmitted to the EPG generating device 100. Upon receiving the display information of the changed channel, the first controller 140 may perform anew the selection of display apparatuses to receive real-time display information, e.g., a broadcasting image. For example, if the channel is changed to a channel B after transmitting the image of a channel A, such that the image of channel B is more recently transmitted, the first controller 140 may select another display apparatus to receive the image of channel A, which may be a more recently broadcast image. For channel B, the channel-B image transmitted by the first display apparatus or by yet another selected display apparatus may be used. To facilitate the selection, the broadcasting information received by the first controller 140 may include information indicative of a changed channel of the corresponding display apparatus.

The first controller 140 may control the EPG generator 130 to generate the EPG on a regular basis, for example, at predetermined intervals or at predetermined times. With an EPG generated and stored in the first storage unit 120, the first controller 140 may perform display apparatus selection by requesting display information on a regular basis, to receive new display information and update the EPG accordingly.

Upon receiving a request for an EPG from at least one display apparatus (which may include one of display apparatuses 200), the first controller 140 may control the EPG generator 130 to generate an EPG. The generated EPG is stored in the first storage unit 120.

ID information and broadcasting information received from the plurality of display apparatuses 200 may be used by the first controller 140 to generate a user preference list for channels or broadcasting programs by location (broadcasting area) or for channels or broadcasting programs by broadcasting time. The generated list may be provided to an EPG-requesting display apparatus together with an EPG. For example, a channel or program ratings list may be arranged according to location, or a channel or program ratings list may be arranged according to broadcasting time. The user preference list may include a new program list and/or a favorite program list.

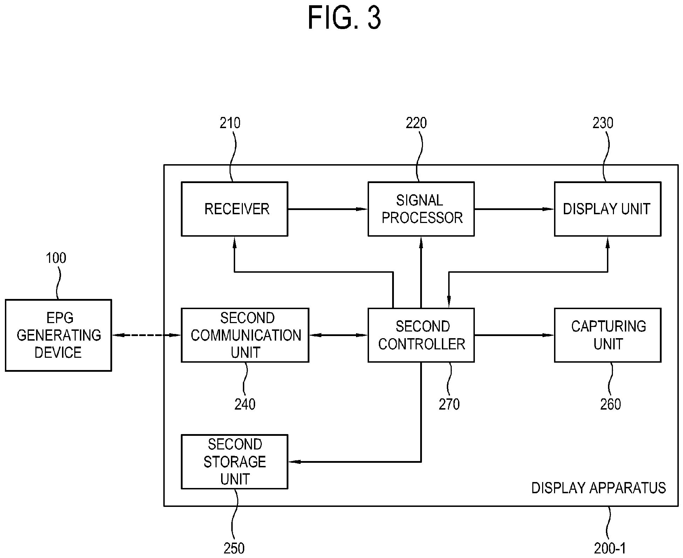

Referring to FIG. 3, a display apparatus 200-1 of the system of FIG. 1 includes a receiver 210, a signal processor 220, a display unit 230, a second communication unit 240, a second storage unit 250, a capturing unit 260, and a second controller 270, which controls the foregoing elements. It may be assumed that the display apparatus 200-1 performs all its functions under control of the second controller 270, unless otherwise noted. It may be further assumed that the display apparatus 200-1 is merely representative of any one of the plurality of display apparatuses 200.

The display apparatus 200-1 may receive a broadcasting signal from a local device (not shown) providing a broadcasting signal to the display apparatus 200-1 and may receive an EPG together with the broadcasting signal. Any of the plurality of display apparatuses 200, or a similar display apparatus, may receive and selectively display the EPG generated by the EPG generating device 100 or an EPG provided by the local device. The local device may be, for example, a set-top box or a home network portal, and the broadcasting signal provided by the local device may be provided according to an airwave or terrestrial broadcasting service, a cable broadcasting service, a satellite broadcasting service, a digital broadcasting service, and/or an IP broadcasting service. The broadcasting signal may be provided to the receiver 210.

The receiver 210 may receive a broadcasting signal from an external image source (not shown). For example, the receiver 210 may include an antenna (not shown) and a tuner (not shown). The receiver 210 varies depending on a standard of the broadcasting signal and/or the embodiment of the display apparatus 200-1. For example, the receiver 210 may receive signals, include data signals, according to high definition multimedia interface (HDMI) or universal serial bus (USB) component standards and may include one or more connection terminals (not shown) corresponding to such standards. The received broadcasting signal is transmitted to the signal processor 120.

The signal processor 220 processes a received signal from the receiver 210 and transmits the processed signal to the display unit 230. The signal processor 220 may solely or in tandem with other components perform various processing operations, including a de-multiplexing operation to divide a received signal, a decoding operation corresponding to a particular format, a de-interlacing operation to convert an interlaced signal into a progressive signal, a scaling operation to scale a signal to a preset resolution, a noise reduction operation to improve signal quality, a detail enhancement operation, and a frame refresh rate conversion operation. The signal processor 220 may further include an audio signal processor (not shown) to process an audio signal separately from an image signal, and the display unit 230 of the display apparatus 200-1 may further include a speaker to output the processed audio signal.

The display unit 230 may display an image corresponding to the broadcasting signal output by the signal processor 220. The display unit 230 may include a display panel (not shown) of, for example, a liquid crystal, plasma, light-emitting diode, organic light-emitting diode, surface-conduction electron-emitter, carbon nano-tube, or nano-crystal type, which may be driven by a panel driver (not shown).

The second communication unit 240 (e.g., a transceiver) may communicate with the EPG generating device 100. If the display apparatus 200-1 is turned on, ID information of the display apparatus 200-1 stored in the second storage unit 250 is transmitted to the EPG generating device 100. Thereafter, the second communication unit 240 may transmit broadcasting information of a changed channel to the EPG generating device 100, that is, whenever a channel of the display apparatus 200-1 is changed, and/or may transmit broadcasting information according to a predetermined time interval. Broadcasting information of a broadcasting signal currently displayed by (or a currently tuned channel of) the display unit 230 is transmitted to the EPG generating device 100 together with the ID information.

The second storage unit 250 stores address information of the EPG generating device 100 as well as the ID information and the broadcasting information of the display apparatus 200-1. If the display apparatus 200-1 is turned on, the ID information is transmitted according to the stored address information of the EPG generating device 100. Broadcasting information of a broadcasting signal (corresponding to a broadcasting service) currently displayed by the display apparatus 200-1 may be transmitted together with the ID information. The broadcasting information may include a channel number and/or program title of the broadcasting signal that is currently displayed.

If the display apparatus 200-1 is turned on, the second controller 270 controls the second communication unit 240 to transmit the stored ID information and information of a broadcasting signal displayed on the display unit 230 to the EPG generating device 100. In response to a request for display information from the EPG generating device 100, the second controller 270 controls the second communication unit 240 to transmit display information of a broadcasting signal currently displayed on the display unit 230 to the EPG generating device 100. Here, the capturing unit 260 may capture (or "print") a screen image displayed on the display unit 230, to generate the requested display information in response to the request. The second controller 270 may then control the second communication unit 240 to transmit the captured image to the EPG generating device 100. That is, the requested display information may include the captured image. The display information may also, or alternatively, include program information (e.g., text or other data) corresponding to the currently displayed (and captured) broadcasting signal. The program information is received by the receiver 210 and may include a channel number of the displayed broadcasting signal, a program title, a program synopsis, program credits, broadcasting time, etc. The program information may be received together with the broadcasting signal by the receiver 210 from the headend. Thus, assuming the display apparatus 200-1 is a selected display apparatus, that is, a display apparatus receiving a request for display information from the first controller 140 of the EPG generating device 100, the display apparatus 200-1 may transmit program information of the currently displayed broadcasting signal in addition to a broadcasting image, whereupon the EPG generator 130 may generate a mosaic EPG by using the received broadcasting image and program information. The second controller 270 may control the second communication unit 240 to transmit a request for a general or mosaic EPG to the EPG generating device 100 and to receive an EPG in response to the request.

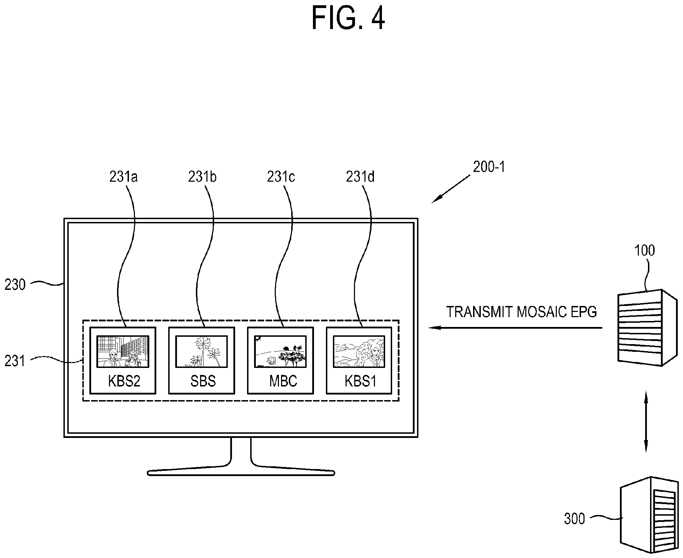

Referring to FIG. 4, the EPG generating device 100 respectively receives, from each of the plurality of display apparatuses 200-1, 200-2, ... 200-N of FIG. 1, ID information and/or broadcasting information of each display apparatus, to select at least one display apparatus based on the received information. Preferably, several display apparatus are selected. For example, the received broadcasting information may determine that a collection of display apparatuses 200-1, 200-2, 200-3, 200-4, and 200-5 are currently displaying, variously, broadcasting programs of channels 1-4, whereby the display apparatuses 200-1 and 200-2 are both tuned to channel 1, the display apparatus 200-3 and 200-4 are both tuned to channel 2, and the display apparatus 200-5 is tuned to channel 3. Here, the received broadcasting information may further determine that no display apparatus is tuned to channel 4.

In this case, for display information comprising a broadcasting image, the EPG generating device 100 selects one of the display apparatuses 200-1 and 200-2 to obtain a broadcasting image of channel 1 and selects one of the display apparatuses 200-3 and 200-4 to obtain a broadcasting image of channel 2. For example, the EPG generating device 100 may select the display apparatus 200-1 for channel 1 and select the display apparatus 100-3 for channel 2. Based on this selection, the EPG generating device 100 may request a broadcasting image that is currently displayed from each of the display apparatuses 200-1, 200-3, and 200-5. Since no display apparatus currently displays channel 4, the EPG generating device receives a representative image of a broadcasting program of channel 4 from the EPG database 300. The EPG generating device 100 generates a mosaic EPG 231 including broadcasting images 231a, 231b, and 231c, and a representative image 231d corresponding to broadcasting programs of channels 1-4, respectively. That is, the EPG generating device 100 generates a mosaic EPG by using the image 231a of channel 1 transmitted by the display apparatus 200-1, the image 231b of channel 2 transmitted by the display apparatus 200-3, the image 231c of channel 3 transmitted by the display apparatus 200-5, and the image 231d of channel 4 obtained from the EPG database 300. The EPG generating device 100 then transmits the mosaic EPG 231 to a display apparatus (e.g., 200-1) which has requested an EPG. Here, it should be appreciated that the display apparatus of FIG. 4 is not necessarily one of the display apparatuses of FIG. 1 and has not necessarily performed any prior transmission of ID information or broadcasting information. In other words, a display apparatus need not be a participant in the data collection preformed by the EPG generating device 100, before requesting an EPG from the EPG generating device 100.

The mosaic EPG generated as above includes an image of a program currently broadcast in the case of channels 1-3. Thus, the generated EPG reflects real-time information about the broadcasting service, programs, and/or content.

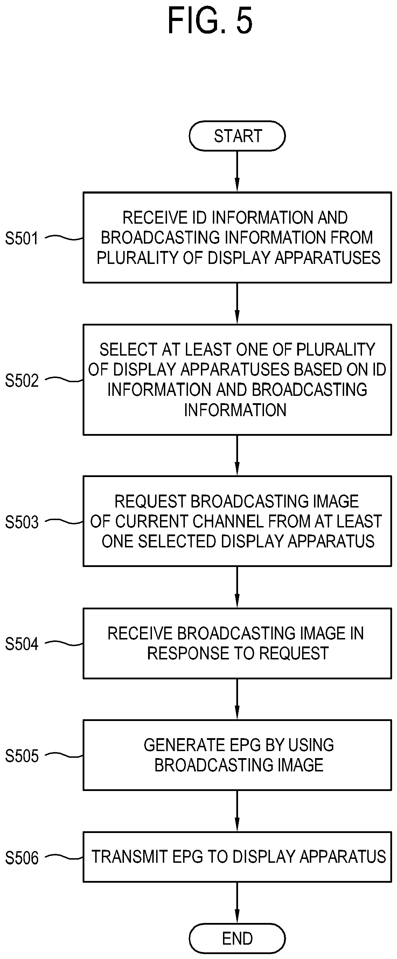

Referring to FIG. 5, illustrating a control operation of the EPG generating device shown in FIG. 2, the first communication unit 110 of the EPG generating device 100 receives ID information and/or broadcasting information of the plurality of display apparatuses 200 (S501). The ID information includes at least one of inherent ID information, location information, and headend information of a corresponding display apparatus. The broadcasting information may include a channel number of a broadcasting signal currently displayed on a corresponding display apparatus and/or a broadcasting program title of a broadcasting signal currently displayed on a corresponding display apparatus. The first controller 140 of the EPG generating device 100 selects at least one of the plurality of display apparatuses 200 based on the received ID information and broadcasting information (S502) and controls the first communication unit 110 to request, from the selected display apparatus, display information (e.g., a broadcasting image) of a broadcasting signal that is currently displayed (S503). If a broadcasting image is received in response to the request (S504), the first controller 140 controls the EPG generator 130 to generate a mosaic EPG by using the received broadcasting image (S505). The generated mosaic EPG is transmitted to a display apparatus which has requested an EPG (S506).

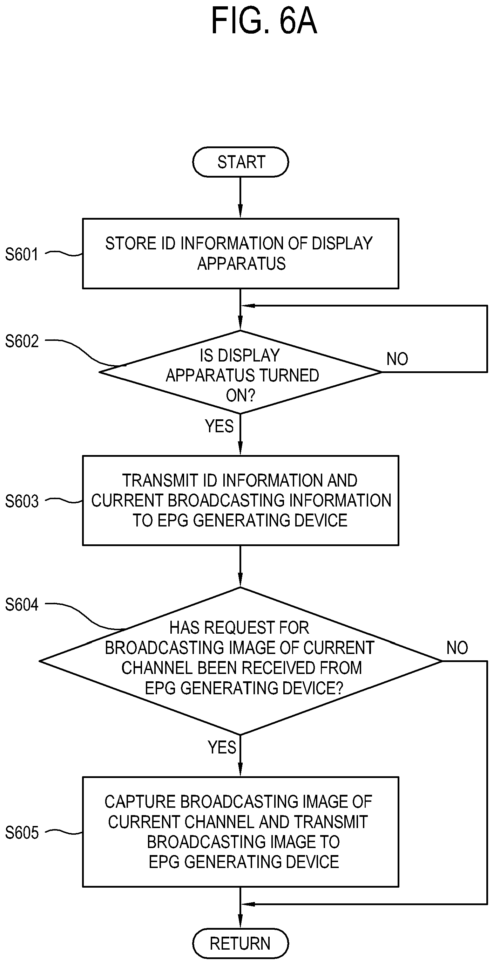

Referring to FIG. 6A, illustrating a control operation of the display apparatus in FIG. 3, the display apparatus 200-1, which includes the receiver 210 to receive a broadcasting signal, the signal processor 220 to process the broadcasting signal, and the display unit 230 to display the processed broadcasting signal, the ID information of the display apparatus 200-1 is stored in the second storage unit 250 (S601). The ID information includes at least one of the inherent ID information, location information, and headend information of the display apparatus 200-1. Address information of the EPG generating device 100 may be also stored.

The second controller 270 of the display apparatus 200-1 determines whether the display apparatus 200-1 is turned on (S602). If the display apparatus 200-1 is turned on (S602-YES), the second controller 270 controls the second communication unit 240 to transmit the ID information of the display apparatus 200-1 to the EPG generating device 100. The second controller 270 may control the second communication unit 240 to transmit to EPG generating device 100 the broadcasting information of the broadcasting signal that is currently displayed, together with the ID information (S603). The broadcasting information includes a channel number and/or program title of a broadcasting signal that is currently displayed by the display apparatus 200-1. If the display is not turned on (S602-NO), the second controller 270 may wait (idle) until the display apparatus 200-1 is turned on.

Upon receiving from the EPG generating device 100 a request for display information (e.g., a broadcasting image) of a broadcasting signal that is currently displayed (S604), the second controller 270 controls the second communication unit 240 to transmit to the EPG generating device 100 a broadcasting image of a broadcasting signal that is currently displayed, the image being captured by the capturing unit 260 (S605). If a request for display information is not received, the display apparatus 200 waits for receipt of the request (S604-NO).

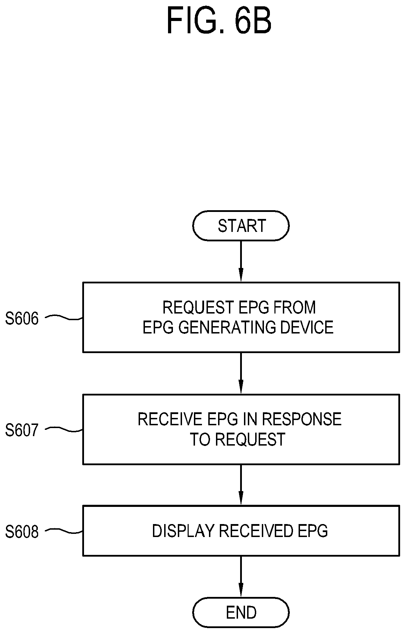

Referring to FIG. 6B, illustrating a control operation of the display apparatus shown in FIG. 3, the second controller 270 may control the second communication unit 240 to transmit an EPG request to the EPG generating device 100 (S606) and to receive an EPG in response to the request (S607). The second controller 270 may then control the display unit 230 to display the received EPG (S608). Alternatively, the EPG generating device 100 may provide an EPG to a display apparatus without receiving a corresponding request.

As described above, a device and a method for generating an EPG generates a mosaic EPG reflecting real-time information for any or all channels of each of a plurality of local broadcasting signal providers. A display apparatus is configurable for use with the device and the method.

Although a few exemplary embodiments have been shown and described, it will be appreciated by those skilled in the art that changes may be made in these exemplary embodiments without departing from the principles and spirit of the inventive concept, the range of which is defined in the appended claims and their equivalents.

## Claims

1. A method for generating an electronic program guide (EPG), the method comprising:
receiving (S501) at least one of identification (ID) information and broadcasting information from each of a plurality of display apparatuses (200) capable of displaying a broadcasting signal;
the method **characterized by**:
transmitting (S503) to at least one of the plurality of display apparatuses a request for display information of the broadcasting signal that is currently displayed by a corresponding display apparatus;
receiving (S504) display information including a captured broadcasting image from a display apparatus of the plurality of display apparatuses in response to the transmitted request for display information;
generating (S505) an EPG based on the received display information; and
transmitting the generated EPG to at least one of the plurality of display apparatuses,
wherein the generated EPG comprises the captured broadcasting image.

2. The method according to claim 1, further comprising:
storing (S601) the received at least one of ID information and broadcasting information; and
selecting (S502) at least one of the plurality of display apparatuses (200) based on the stored information,
wherein the request for display information is transmitted to the selected at least one display apparatus.

3. The method according to claim 2, wherein the stored ID information includes location information of a corresponding display apparatus (200), and the selected at least one display apparatus includes at least one display apparatus for each of a plurality of locations.

4. The method according to claim 2, wherein the stored ID information includes headend information of a corresponding display apparatus (200), and the selected at least one display apparatus includes at least one display apparatus for each of a plurality of headends.

5. The method according to claim 2, wherein the stored broadcasting information includes channel information of a current display of a corresponding display apparatus (200), and the selected at least one display apparatus includes at least one display apparatus for each of a plurality of channels.

6. The method according to claim 1, wherein the ID information of a display apparatus (200) includes at least one of inherent ID information of the display apparatus, location information of the display apparatus, and headend information of the display apparatus.

7. The method according to claim 1, wherein the broadcasting information of a display apparatus (200) includes at least one of channel information of a current display of the display apparatus, program information of a current display of the display apparatus, and information indicative of a changed channel of the display apparatus.

8. The method according to claim 1, further comprising:
transmitting (S506) the generated EPG to a requesting display apparatus (200) according to an EPG request made by the requesting display apparatus.

9. The method according to claim 8, further comprising:
generating a preference list of items arranged according to at least one of a broadcasting area and a broadcasting time, based on the received ID information and broadcasting information, the items of the preference list comprising at least one of a plurality of channels and a plurality of programs; and
transmitting the generated preference list to the requesting display apparatus (200).

10. A device (100) for generating an electronic program guide (EPG), the device comprising:
a communication unit (110) configured to
receive at least one of identification (ID) information and broadcasting information from each of a plurality of display apparatuses (200) capable of displaying a broadcasting signal,
the device **characterized in that:**
the communication unit (110) is configured to
transmit to at least one of the plurality of display apparatuses a request for display information of the broadcasting signal that is currently displayed by a corresponding display apparatus, and
receive display information including a captured broadcasting image from a display apparatus of the plurality of display apparatuses in response to the transmitted request for display information;
an EPG generator (130) configured to generate an EPG based on the received display information; and
wherein the communication unit (110) is further configured to transmit the generated EPG to at least one of the plurality of display apparatuses,
wherein the generated EPG comprises the captured broadcasting image.

11. The device according to claim 10, further comprising:
a storage unit (120) configured to store the received at least one of ID information and broadcasting information; and
a controller (140) configured to select at least one of the plurality of display apparatuses (200) based on the stored information,
wherein the request for display information is transmitted to the selected at least one display apparatus.

12. The device according to claim 11, wherein the stored ID information includes location information of a corresponding display apparatus (200), and the selected at least one display apparatus includes at least one display apparatus for each of a plurality of locations.

13. The device according to claim 11, wherein the stored ID information includes headend information of a corresponding display apparatus (200), and the selected at least one display apparatus includes at least one display apparatus for each of a plurality of headends.

14. The device according to claim 11, wherein the stored broadcasting information includes channel information of a current display of a corresponding display apparatus (200), and the selected at least one display apparatus includes at least one display apparatus for each of a plurality of channels.

## Patentansprüche

1. Verfahren zur Erzeugung eines elektronischen Programmführers (Electronic Program Guide, EPG), wobei das Verfahren Folgendes umfasst:
Empfangen (S501) von Identifizierungs (ID)-Information und/oder Rundsendeinformation von jeder einer Vielzahl von Anzeigevorrichtungen (200), die fähig sind, ein Rundsendesignal anzuzeigen;
wobei das Verfahren **gekennzeichnet ist durch**:
Übertragen (S503) an mindestens eine der Vielzahl von Anzeigevorrichtungen einer Anforderung für die Anzeigeinformation des Rundsendesignals, welches aktuell von einer entsprechenden Anzeigevorrichtung angezeigt wird;
Empfangen (S504) der Anzeigeinformation, einschließlich eines aufgenommenen Rundsendebilds von einer Anzeigevorrichtung der Vielzahl von Anzeigevorrichtungen in Reaktion auf die übertragene Anforderung für die Anzeigeinformation;
Erzeugen (S505) eines EPG basierend auf der empfangenen Anzeigeinformation; und
Übertragen des erzeugten EPG an mindestens eine der Vielzahl von Anzeigevorrichtungen,
wobei der erzeugte EPG das aufgenommene Rundsendebild umfasst.

2. Verfahren nach Anspruch 1, ferner umfassend:
Speichern (S601) der empfangenen ID-Information und/oder Rundsendeinformation; und
Auswählen (S502) von mindestens einer der Vielzahl von Anzeigevorrichtungen (200) basierend auf der gespeicherten Information,
wobei die Anforderung für die Anzeigeinformation an die ausgewählte mindestens eine Anzeigevorrichtung übertragen wird.

3. Verfahren nach Anspruch 2, wobei die gespeicherte ID-Information die Standortinformation einer entsprechenden Anzeigevorrichtung (200) einschließt, und die ausgewählte mindestens eine Anzeigevorrichtung mindestens eine Anzeigevorrichtung für jeden der Vielzahl von Standorten einschließt.

4. Verfahren nach Anspruch 2, wobei die gespeicherte ID-Information die Kopfstelleninformation einer entsprechenden Anzeigevorrichtung (200) einschließt, und die ausgewählte mindestens eine Anzeigevorrichtung mindestens eine Anzeigevorrichtung für jede der Vielzahl von Kopfstellen einschließt.

5. Verfahren nach Anspruch 2, wobei die gespeicherte Rundsendeinformation die Kanalinformation einer aktuellen Anzeige einer entsprechenden Anzeigevorrichtung (200) einschließt, und die ausgewählte mindestens eine Anzeigevorrichtung mindestens eine Anzeigevorrichtung für jeden der Vielzahl von Kanälen einschließt.

6. Verfahren nach Anspruch 1, wobei die ID-Information einer Anzeigevorrichtung (200) die inhärente ID-Information der Anzeigevorrichtung und/oder die Standortinformation der Anzeigevorrichtung und/oder die Kopfstelleninformation der Anzeigevorrichtung einschließt.

7. Verfahren nach Anspruch 1, wobei die Rundsendeinformation einer Anzeigevorrichtung (200) die Kanalinformation einer aktuellen Anzeige der Anzeigevorrichtung und/oder die Programminformation einer aktuellen Anzeige der Anzeigevorrichtung und/oder die Information, die einen geänderten Kanal der Anzeigevorrichtung angibt, einschließt.

8. Verfahren nach Anspruch 1, ferner umfassend:
Übertragen (S506) des erzeugten EPG an eine anfordernde Anzeigevorrichtung (200) gemäß einer EPG-Anforderung, die von der anfordernden Anzeigevorrichtung durchgeführt wurde.

9. Verfahren nach Anspruch 8, ferner umfassend:
Erzeugen einer Präferenzliste von Elementen, die gemäß einem Rundsendegebiet und/oder einer Rundsendezeit angeordnet ist, basierend auf der empfangenen ID-Information und der empfangenen Rundsendeinformation, wobei die Elemente der Präferenzliste eine Vielzahl von Kanälen und/oder eine Vielzahl von Programmen umfassen; und
Übertragen der erzeugten Präferenzliste an die anfordernde Anzeigevorrichtung (200).

10. Vorrichtung (100) zur Erzeugung eines elektronischen Programmführers (Electronic Program Guide, EPG), wobei die Vorrichtung Folgendes umfasst:
eine Kommunikationseinheit (110), die konfiguriert ist, um
eine Identifizierungs(ID)-Information und/oder eine Rundsendeinformation von jeder von einer Vielzahl von Anzeigevorrichtungen (200) zu empfangen, die fähig sind, ein Rundsendesignal anzuzeigen,
wobei die Vorrichtung **dadurch gekennzeichnet ist, dass**:
die Kommunikationseinheit (110) konfiguriert ist, um
mindestens an eine der Vielzahl von Anzeigevorrichtungen eine Anforderung für die Anzeigeinformation des Rundsendesignals zu übertragen, welches aktuell von einer entsprechenden Anzeigevorrichtung angezeigt wird, und
die Anzeigeinformation zu empfangen, einschließlich eines aufgenommenen Rundsendebilds von einer Anzeigevorrichtung der Vielzahl von Anzeigevorrichtungen in Reaktion auf die übertragene Anforderung für die Anzeigeinformation;
einen EPG-Generator (130), der konfiguriert ist, um einen EPG basierend auf der empfangenen Anzeigeinformation zu erzeugen; und
wobei die Kommunikationseinheit (110) ferner konfiguriert ist, um den erzeugten EPG an mindestens eine der Vielzahl von Anzeigevorrichtungen zu übertragen,
wobei der erzeugte EPG das aufgenommene Rundsendebild umfasst.

11. Vorrichtung nach Anspruch 10, ferner umfassend:
eine Speichereinheit (120), die konfiguriert ist, um die empfangene ID-Information und/oder Rundsendeinformation zu speichern; und
einen Controller (140), der konfiguriert ist, um mindestens eine der Vielzahl von Anzeigevorrichtungen (200) basierend auf der gespeicherten Information auszuwählen,
wobei die Anforderung für die Anzeigeinformation an die ausgewählte mindestens eine Anzeigevorrichtung übertragen wird.

12. Vorrichtung nach Anspruch 11, wobei die gespeicherte ID-Information die Standortinformation einer entsprechenden Anzeigevorrichtung (200) einschließt, und die ausgewählte mindestens eine Anzeigevorrichtung mindestens eine Anzeigevorrichtung für jeden der Vielzahl von Standorten einschließt.

13. Vorrichtung nach Anspruch 11, wobei die gespeicherte ID-Information die Kopfstelleninformation einer entsprechenden Anzeigevorrichtung (200) einschließt, und die ausgewählte mindestens eine Anzeigevorrichtung mindestens eine Anzeigevorrichtung für jede der Vielzahl von Kopfstellen einschließt.

14. Vorrichtung nach Anspruch 11, wobei die gespeicherte Rundsendeinformation die Kanalinformation einer aktuellen Anzeige einer entsprechenden Anzeigevorrichtung (200) einschließt, und die ausgewählte mindestens eine Anzeigevorrichtung mindestens eine Anzeigevorrichtung für jeden der Vielzahl von Kanälen einschließt.

## Revendications

1. Procédé pour générer un guide de programme électronique (EPG), le procédé comprenant de :
recevoir (S501) au moins les unes d'informations d'identification (ID) et d'informations de diffusion à partir de chacun d'une pluralité d'appareils d'affichage (200) capables d'afficher un signal de diffusion ;
le procédé étant **caractérisé par** :
transmettre (S503) à au moins l'un de la pluralité d'appareils d'affichage une demande pour des informations d'affichage du signal de diffusion qui est actuellement affiché par un appareil d'affichage correspondant ;
recevoir (S504) des informations d'affichage comprenant une image de diffusion capturée à partir d'un appareil d'affichage de la pluralité d'appareils d'affichage en réponse à la demande transmise pour des informations d'affichage ;
générer (S505) un EPG sur la base des informations d'affichage reçues ; et
transmettre l'EPG généré à au moins l'un de la pluralité d'appareils d'affichage,
dans lequel l'EPG généré comprend l'image de diffusion capturée.

2. Procédé selon la revendication 1, comprenant en outre de :
stocker (S601) lesdites au moins unes des informations d'identification et des informations de diffusion reçues ; et
sélectionner (S502) au moins l'un de la pluralité d'appareils d'affichage (200) sur la base des informations stockées,
dans lequel la demande pour des informations d'affichage est transmise audit au moins un appareil d'affichage sélectionné.

3. Procédé selon la revendication 2, dans lequel les informations d'identification stockées comprennent des informations de localisation d'un appareil d'affichage correspondant (200) et ledit au moins un appareil d'affichage sélectionné comprend au moins un appareil d'affichage pour chacun d'une pluralité d'emplacements.

4. Procédé selon la revendication 2, dans lequel les informations d'identification stockées comprennent des informations de tête de réseau d'un appareil d'affichage correspondant (200) et ledit au moins un appareil d'affichage sélectionné comprend au moins un appareil d'affichage pour chacune d'une pluralité de têtes de réseau.

5. Procédé selon la revendication 2, dans lequel les informations de diffusion stockées comprennent des informations de canal d'un affichage actuel d'un appareil d'affichage correspondant (200) et ledit au moins un appareil d'affichage sélectionné comprend au moins un appareil d'affichage pour chacun d'une pluralité de canaux.

6. Procédé selon la revendication 1, dans lequel les informations d'identification d'un appareil d'affichage (200) comprennent au moins les unes d'informations d'identification inhérentes de l'appareil d'affichage, d'informations de localisation de l'appareil d'affichage, et d'informations de tête de réseau de l'appareil d'affichage.

7. Procédé selon la revendication 1, dans lequel les informations de diffusion d'un appareil d'affichage (200) comprennent au moins les unes d'informations de canal d'un affichage actuel de l'appareil d'affichage, d'informations de programme d'un affichage actuel de l'appareil d'affichage, et d'informations indiquant un changement de canal de l'appareil d'affichage.

8. Procédé selon la revendication 1, comprenant en outre de :
transmettre (S506) l'EPG généré à un appareil d'affichage demandeur (200) en fonction d'une demande d'EPG faite par l'appareil d'affichage demandeur.

9. Procédé selon la revendication 8, comprenant en outre de :
générer une liste de préférence d'éléments agencés en fonction d'au moins l'une d'une zone de diffusion et d'une heure de diffusion, sur la base des informations d'identification et des informations de diffusion reçues, les éléments de la liste de préférence comprenant au moins l'une d'une pluralité de canaux et d'une pluralité de programmes ; et
transmettre la liste de préférences générée à l'appareil d'affichage demandeur (200).

10. Dispositif (100) pour générer un guide de programme électronique (EPG), le dispositif comprenant :
une unité de communication (110) configurée pour :
recevoir au moins les unes d'informations d'identification (ID) et d'informations de diffusion à partir de chacun d'une pluralité d'appareils d'affichage (200) capables d'afficher un signal de diffusion ;
le dispositif étant **caractérisé en ce que** :
l'unité de communication (110) est configurée pour :
transmettre à au moins l'un de la pluralité d'appareils d'affichage une demande pour des informations d'affichage du signal de diffusion qui est actuellement affiché par un appareil d'affichage correspondant ;
recevoir des informations d'affichage comprenant une image de diffusion capturée à partir d'un appareil d'affichage de la pluralité d'appareils d'affichage en réponse à la demande transmise pour des informations d'affichage ;
un générateur d'EPG (130) configuré pour générer un EPG sur la base des informations d'affichage reçues ; et
dans lequel l'unité de communication (110) est en outre configurée pour :
transmettre l'EPG généré à au moins l'un de la pluralité d'appareils d'affichage,
dans lequel l'EPG généré comprend l'image de diffusion capturée.

11. Dispositif selon la revendication 10, comprenant en outre :
une unité de stockage (120) configurée pour stocker lesdites au moins unes des informations d'identification et des informations de diffusion reçues ; et
un contrôleur (140) configuré pour sélectionner au moins l'un de la pluralité d'appareils d'affichage (200) sur la base des informations stockées,
dans lequel la demande pour des informations d'affichage est transmise audit au moins un appareil d'affichage sélectionné.

12. Dispositif selon la revendication 11, dans lequel les informations d'identification stockées comprennent des informations de localisation d'un appareil d'affichage correspondant (200) et ledit au moins un appareil d'affichage sélectionné comprend au moins un appareil d'affichage pour chacun d'une pluralité d'emplacements.

13. Dispositif selon la revendication 11, dans lequel les informations d'identification stockées comprennent des informations de tête de réseau d'un appareil d'affichage correspondant (200) et ledit au moins un appareil d'affichage sélectionné comprend au moins un appareil d'affichage pour chacune d'une pluralité de têtes de réseau.

14. Dispositif selon la revendication 11, dans lequel les informations de diffusion stockées comprennent des informations de canal d'un affichage actuel d'un appareil d'affichage correspondant (200) et ledit au moins un appareil d'affichage sélectionné comprend au moins un appareil d'affichage pour chacun d'une pluralité de canaux.
